# EUROPEAN PATENT SPECIFICATION

(11) **EP 3 762 694 B1**
(45) Date of publication and mention of the grant of the patent: **25.01.2023**
(21) Application number: 18909233.1
(22) Date of filing: 15.11.2018
(51) Int. Cl.: G01K 1/14, G01K 1/08, G01K 1/024

(54) **DEVICE FOR MEASURING THE TEMPERATURE OF A CONDUCTOR**
VORRICHTUNG ZUR MESSUNG DER TEMPERATUR EINES LEITERS
DISPOSITIF DE MESURE DE LA TEMPÉRATURE D'UN CONDUCTEUR

(30) Priority: 09.03.2018 CN 201810194237
(43) Date of publication of application: 13.01.2021
(73) Proprietor: ABB Schweiz AG, 5400 Baden (CH)
(72) Inventor: HUANG, Siyuan, Xiamen, Fujian 361022 (CN); XU, Guanmian, Xiamen, Fujian 361021 (CN); SU, Yonghui, Xiamen, Fujian 361006 (CN)
(74) Representative: Zimmermann & Partner Patentanwälte mbB
(86) International application number: PCT/CN2018/115737
(87) International publication number: WO 2019/169894

(56) References cited:
- CN-A- 101 057 149
- CN-A- 103 364 100
- CN-A- 103 994 839
- CN-A- 108 489 621
- CN-A- 108 562 849
- CN-U- 204 691 823
- CN-Y- 201 373 746
- JP-A- 2014 178 258
- US-A1- 2009 141 433

## Description

### FIELD

Embodiments of the present disclosure relate to the field of electrical power, and more specifically to a device for measuring a temperature of a conductor (e.g., a cable, busbar or copper busbar).

### BACKGROUND

In a switch cabinet or a switchgear, the temperature of a conductor (e.g., cable, busbar or copper busbar) is a very important operational parameter. Wireless contact-type sensors are increasingly applied to measure or monitor temperature because they can be easily installed and have higher precision of detection. Reference is made, for example, to US2009/141433 A1 and CN103994839 A. Specifically, US2009/141433 A1 (see fig. 1-2, [0028]-[0035]) discloses a sensor assembly (2) for measuring the temperature of a power bus (200) of a switchgear device, comprising a housing (6), a power coil (82), a circuit board (74), a temperature sensor (70), a base (8), and a cover (10). CN103994839 A (see fig. 1-3, [0014]-[0020]) discloses a wireless temperature sensor for detecting the temperature of a cylindrical conductor (10), comprising a bottom shell (8), a power coil (2), a circuit board (3), a temperature sensor (15) within a thermometric contact (5), a compression spring (16), and a cover (1).

However, in the high-temperature operational environment, lifetime of components on a circuit board of the sensor will be substantially reduced.

In addition, a rigid contact is usually implemented between the sensor and the conductor to be measured. Such rigid contact may degrade over time, and as a result, the sensor and the conductor cannot have a tight contact with each other, so that durability of the measuring device is adversely affected.

Accordingly, there is a need for a further improvement to the temperature measuring device or temperature monitoring device.

### SUMMARY

The invention is defined by the independent claim. The dependent claims define further embodiments of the invention. Embodiments of the present disclosure provide a device for measuring a temperature of a conductor that can at least partially solve the problems above.

According to the present invention, there is provided a device for measuring a temperature of a conductor. The device comprises a housing; a coil disposed at a bottom of the housing; a circuit board disposed inside the housing and spaced apart from the coil in a vertical direction relative to a placement plane of the device, the circuit board being powered by the coil; and a temperature sensor coupled to the circuit board, wherein at least one sidewall of the housing is provided with an opening located at least in part between the circuit board and the coil in the vertical direction, so that air can flow between the exterior and interior of the housing through the opening. The temperature sensor comprises a body and an elastic element disposed around the body, and the elastic element is adapted to be compressed to cause a bottom of the temperature sensor to contact the conductor in a state that the device is fixed to the conductor.

In some embodiments, sidewalls of the housing are each provided with the opening.

In some embodiments, two opposite sidewalls of the housing are symmetrically provided with the opening.

In some embodiments, the housing is provided with a support for supporting the circuit board, such that the circuit board is spaced apart from the coil.

In some embodiments, the support comprises a rib disposed on an inner surface of a sidewall of the housing.

In some embodiments, a through hole extending in the vertical direction is disposed in the housing to receive the body of the temperature sensor.

In some embodiments, a stopper is disposed in the through hole to compress the elastic element in the vertical direction towards the bottom of the housing, so that the bottom of the temperature sensor contacts the conductor.

In some embodiments, the temperature sensor further comprises a fixing element, wherein a top of the body is provided with a slot, and wherein the fixing element is disposed above the stopper and snap-fitted in the slot to mount the temperature sensor onto the device.

In some embodiments, the device further comprises a mounting element arranged adjacent to the bottom of the housing to fix the device onto the conductor.

In some embodiments, there is provided a switching device which may include the device according to any of the above embodiments.

### BRIEF DESCRIPTION OF THE DRAWINGS

The above and other objects, features and features of embodiments of the present disclosure will be made more apparent by the following detailed depictions with reference to figures. In the figures, multiple embodiments of the present disclosure will be described in an exemplary but non-restrictive manner, wherein:
Fig. 1 illustrates an exploded view of a temperature measuring device according to an embodiment of the present disclosure;
Fig. 2 illustrates a perspective view of a housing of the temperature measuring device according to an embodiment of the present disclosure;
Fig. 3 illustrates a schematic diagram of a sensor assembly of the temperature measuring device according to an embodiment of the present disclosure;
Figs. 4A and 4B illustrate a schematic diagram of an installation method of the temperature measuring device according to an embodiment of the present disclosure; and
Figs. 5A and 5B illustrate a schematic diagram of another installation method of the temperature measuring device according to an embodiment of the present disclosure.

### DETAILED DESCRIPTION

The subject matter described herein will now be discussed with reference to several example implementations. It is to be understood these implementations are discussed only for the purpose of enabling those skilled persons in the art to better understand and thus implement the subject matter described herein.

As used herein, the term "includes" and its variants are to be read as open terms that mean "includes, but is not limited to." The term "one implementation" and "an implementation" are to be read as "at least one implementation." The term "another implementation" is to be read as "at least one other implementation." Other definitions, explicit and implicit, may be included below. Unless otherwise explicitly specified, definitions of terms are consistent throughout the description.

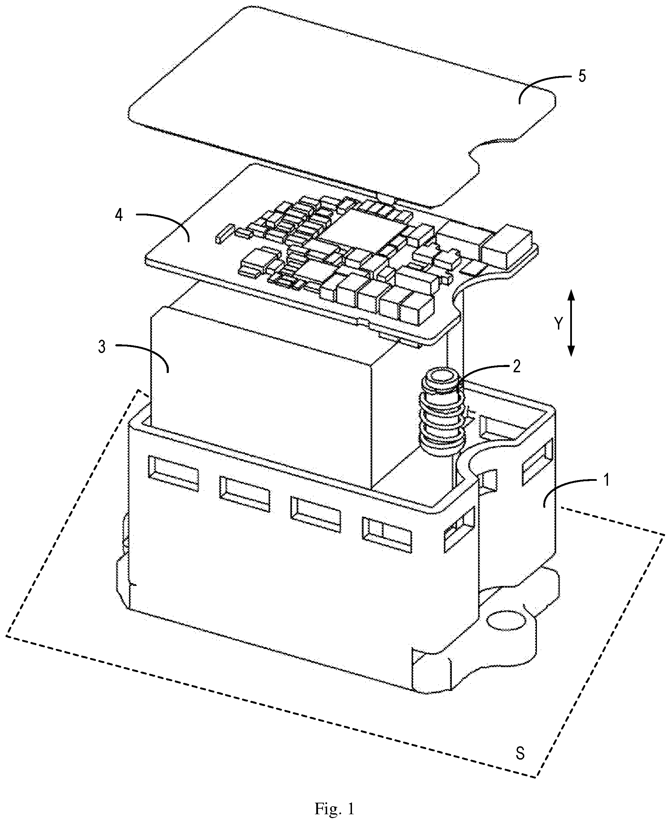

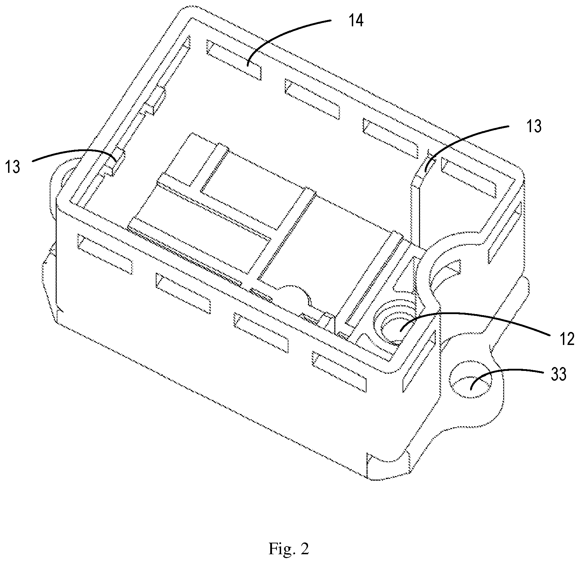

Reference is now made to Figs. 1 and 2 to introduce in detail a temperature measuring device 10 according to an example embodiment of the present disclosure, in which Fig. 1 illustrates an exploded view of the temperature measuring device 10 according to the example embodiment of the present disclosure, and Fig. 2 illustrates a perspective view of a housing 1 of the temperature measuring device 10 according to an example embodiment of the present disclosure. The temperature measuring device 10 may be installed on a conductor to measure the temperature of the conductor. The conductor may conduct an alternating current (AC), and may be a cable, busbar or copper busbar in a device such as a switchgear. Although the conductor is described by taking the busbar or copper busbar as an example, it is possible to use other types of conductors such as an aluminum busbar. This is not limited in the present disclosure.

As shown in Fig. 1, the temperature measuring device 10 includes a housing 1 and a coil 3 disposed at a bottom of the housing 1. In the case that the device 10 is mounted on the conductor, the coil may receive wireless power from the conductor through electromagnetic induction, so as to supply power to a circuit board 4. The circuit board 4 is further provided with various components for receiving the power from the coil 3, transforming the power, and providing a corresponding power supply to the circuit board, for example. In addition, the circuit board 4 may further be provided with a communication circuit (e.g., a wireless communication circuit) to transmit a temperature monitoring signal to the outside.

As shown in Fig. 1, the circuit board 4 is disposed inside the housing 1. The temperature measuring device 10 may further include a cover 5 for covering the circuit board 4. During operation, the conductor generates heat, and the coil 3 also generates heat. The heat results in an increase in the temperature of the circuit board 4, and therefore adversely affects the circuit board 4 and components thereon. To solve this problem, the circuit board is spaced apart from the coil 3 in a vertical direction Y relative to a placement plane S of the device 10. In this way, a thermal insulating space is formed below the circuit board. In an embodiment, the housing 1 may be provided with a support for supporting the circuit board 4, such that the circuit board 4 is spaced apart from the coil 3. For example, the support may include one or more ribs 13 disposed on an inner surface of a sidewall of the housing 1, as shown in Fig. 2.

As shown in Figs. 1 and 2, the device 10 further includes a temperature sensor 2 coupled to the circuit board 4 to provide the sensed temperature signal to the circuit board 4 for further processing. To reduce heat transferred to the circuit board 4, one or more openings 14 are provided on one or more sidewalls of the housing 1. The openings 14 are located at least in part between the circuit board 4 and coil 3 in the vertical direction Y, so that air can flow between the exterior and interior of the housing 1 through the openings 14. For example, the temperature sensor 2 may be also disposed at the bottom of the housing 1, and spaced apart from the circuit 4 in the vertical direction Y. In this case, the openings 14 may be located at least in part between the circuit board 4 and temperature sensor 2 in the vertical direction Y.

The ventilation openings may facilitate air to flow in the thermal insulating space, thereby reducing heat dissipated from the coil 3 and conductor to the circuit board 4. For example, as shown in Figs. 1 and 2, the sidewalls of the housing 1 may all be provided with openings 14. In addition, openings 14 may be disposed symmetrically on two opposite sidewalls of the housing 1 to improve the effect of ventilation and heat dissipation.

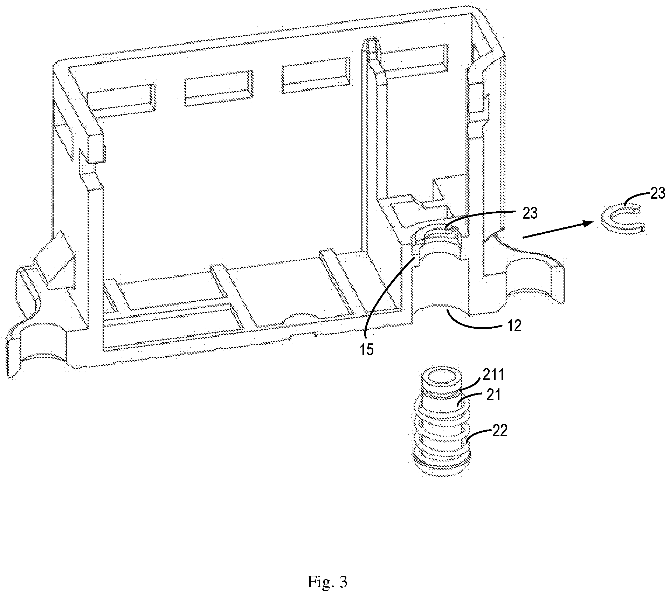

Fig. 3 illustrates a schematic diagram of a temperature sensor 2 according to an embodiment of the present disclosure. As shown in Fig. 3, the temperature sensor 2 includes a body 21 and an elastic element 22 disposed around the body 21. The body 21 may have a tubular shape, and a probe is disposed in the body 21. The body 21 may be made of a material such as copper. In the state that the device 10 is fixed to the conductor, the elastic element 22 is compressed to cause the bottom of the temperature sensor 2 to contact the conductor 20. The elastic element 22 may be a compression spring.

As shown in Figs. 2 and 3, a through hole 12 extending in the vertical direction Y is disposed in the housing 1, and the through hole 12 is used to receive the body 21 of the temperature sensor 2. For example, a stopper 15 may be disposed in the through hole 12, and the stopper 15 is used to compress the elastic element 22 in the vertical direction Y towards the bottom of the housing 1, so that the bottom of the temperature sensor 2 contacts the conductor. For example, the stopper 15 may be integrally formed with the housing 1.

In some embodiments, the temperature sensor 2 may further include a fixing element 23. As shown in Fig. 3, the fixing element 23 may be a crescent-shaped ring or a crescent ring. A top of the body 21 may be provided with a slot 211, and the fixing element 23 is disposed above the stopper 15 and snap-fitted or clamped in the slot 211 to mount the temperature sensor 2 onto the device 10. An upper surface of the stopper 15 may limit the fixing element 23's downward movement in the vertical direction Y. In addition, since the upward movement of fixing element 23 in the vertical direction Y is not limited, the temperature sensor 2 may be movably mounted on the device 10 in the vertical direction Y. Even though the operation condition changes after long-term operation (for example, some sort of loosening is present between the device 10 and the conductor), the elastic element 22 may also make the temperature sensor 2 abut the conductor.

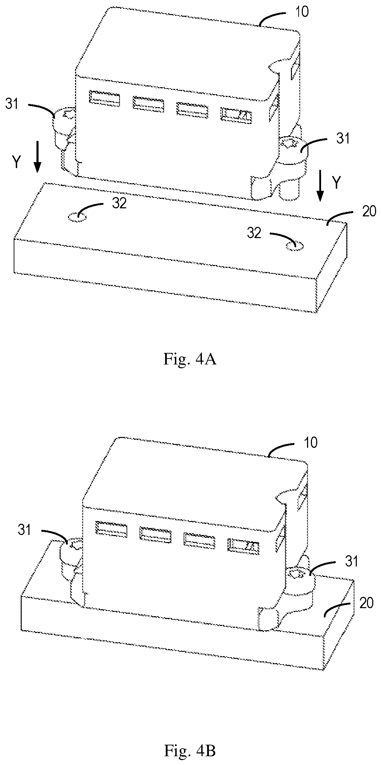

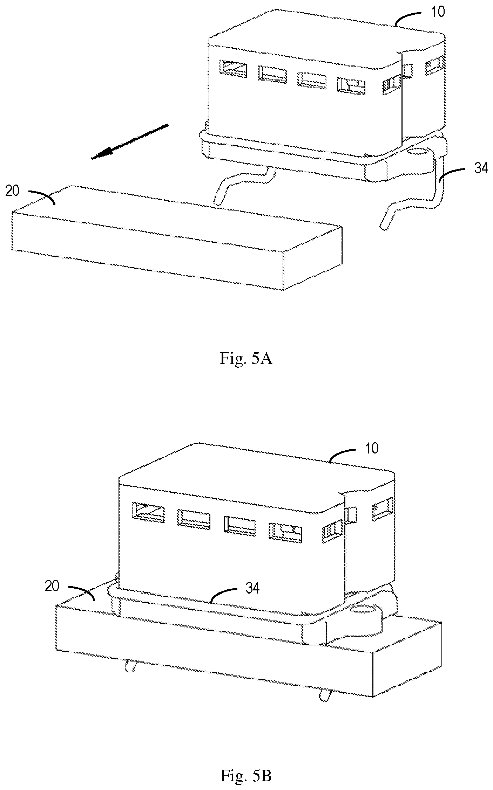

In some embodiments, the device 10 may further include a mounting element arranged adjacent to the bottom of the housing 1, and the mounting element fixes the device 10 onto the conductor. Figs. 4A and 4B show a mounting element implemented by screws, and Figs. 5A and 5B show a mounting element implemented by an elastic clip. It should be understood that example embodiments of multiple mounting elements are shown here for illustrative purpose only without suggesting any limitation as to the scope of the present disclosure.

As shown in Figs. 4A and 4B, the bottom of the device 10 is provided with two ear portions, each ear portion including a through hole extending in the vertical direction Y, shown as a through hole 33 in Fig. 2. The conductor 20 is provided with two holes 32 extending in the vertical direction Y. The screw 31 may pass through the through hole 33 of the ear portion of the device 10 and then the screw 31 may be fixed onto the conductor 20. For example, the hole 32 may be configured to have an internal thread to mate with the screw 31. Alternatively, the hole 32 may be a through hole, and the screw 31 may pass through the hole 32 to mate with a nut. In addition, it is also possible to mount the screw 31 upward from the bottom of the conductor 20 to mate with the nut above the ear portion.

As shown in Figs. 5A and 5B, the elastic clip 34 may clamp the device 10 onto the conductor 20. As shown, the elastic clip 34 includes two portions connected with each other, and each portion may be used to clamp the conductor 20. For example, the elastic clip 34 may be integrally formed. Alternatively, two portions may also be separated and used to clamp the conductor 20, respectively.

## Claims

1. A device (10) for measuring a temperature of a conductor (20), comprising:
a housing (1);
a coil (3) disposed at a bottom of the housing (1);
a circuit board (4) disposed inside the housing (1) and spaced apart from the coil (3) in a vertical direction (Y) relative to a placement plane (S) of the device (10), the circuit board (4) being powered by the coil (3); and
a temperature sensor (2) coupled to the circuit board (4),
wherein the temperature sensor (2) comprises a body (21) and an elastic element (22) disposed around the body (21), and the elastic element (22) is adapted to be compressed to cause a bottom of the temperature sensor (2) to contact the conductor (20) in a state that the device (10) is fixed to the conductor (20),
**characterized in that**
at least one sidewall of the housing (1) is provided with an opening (14) located at least in part between the circuit board (4) and the coil (3) in the vertical direction (Y), so that air can flow between the exterior and interior of the housing (1) through the opening (14).

2. The device (10) according to claim 1, wherein sidewalls of the housing (1) are each provided with the opening (14).

3. The device (10) according to claim 1, wherein two opposite sidewalls of the housing (1) are symmetrically provided with the opening (14).

4. The device (10) according to claim 1, wherein the housing (1) is provided with a support for supporting the circuit board (4), such that the circuit board (4) is spaced apart from the coil (3).

5. The device (10) according to claim 4, wherein the support comprises a rib (13) disposed on an inner surface of a sidewall of the housing (1).

6. The device (10) according to claim 1, wherein a through hole (12) extending in the vertical direction (Y) is disposed in the housing (1) to receive the body (21) of the temperature sensor (2).

7. The device (10) according to claim 6, wherein a stopper (15) is disposed in the through hole (12) to compress the elastic element (22) in the vertical direction (Y) towards the bottom of the housing (1), so that the bottom of the temperature sensor (2) contacts the conductor (20).

8. The device (10) according to claim 7, wherein the temperature sensor (2) further comprises a fixing element (23), wherein a top of the body (21) is provided with a slot (211), and wherein the fixing element (23) is disposed above the stopper (15) and snap-fitted in the slot (211) to mount the temperature sensor (2) onto the device (10).

9. The device (10) according to claim 1, further comprising a mounting element arranged adjacent to the bottom of the housing to fix the device (10) onto the conductor (20).

10. A switching device comprising the device (10) according to any of claims 1-9.

## Patentansprüche

1. Vorrichtung (10) zum Messen der Temperatur eines Leiters (20), umfassend:
ein Gehäuse (1);
eine Spule (3), die an einem Boden des Gehäuses (1) angeordnet ist;
eine Leiterplatte (4), die innerhalb des Gehäuses (1) angeordnet ist und von der Spule (3) in einer vertikalen Richtung (Y) relativ zu einer Platzierungsebene (S) der Vorrichtung (10) beabstandet ist, wobei die Leiterplatte (4) durch die Spule (3) mit Strom versorgt wird; und
einen Temperatursensor (2), der mit der Leiterplatte (4) gekoppelt ist,
wobei der Temperatursensor (2) einen Körper (21) und ein elastisches Element (22) umfasst, das um den Körper (21) herum angeordnet ist, und das elastische Element (22) so ausgelegt ist, dass es zusammengedrückt wird, um zu bewirken, dass ein Boden des Temperatursensors (2) den Leiter (20) in einem Zustand berührt, in dem die Vorrichtung (10) an dem Leiter (20) befestigt ist,
**dadurch gekennzeichnet, dass**
mindestens eine Seitenwand des Gehäuses (1) mit einer Öffnung (14) versehen ist, die zumindest teilweise zwischen der Leiterplatte (4) und der Spule (3) in der vertikalen Richtung (Y) angeordnet ist, so dass Luft zwischen dem Äußeren und dem Inneren des Gehäuses (1) durch die Öffnung (14) strömen kann.

2. Vorrichtung (10) nach Anspruch 1, wobei Seitenwände des Gehäuses (1) jeweils mit der Öffnung (14) versehen sind.

3. Vorrichtung (10) nach Anspruch 1, wobei zwei gegenüberliegende Seitenwände des Gehäuses (1) symmetrisch mit der Öffnung (14) versehen sind.

4. Vorrichtung (10) nach Anspruch 1, wobei das Gehäuse (1) mit einer Halterung zum Tragen der Leiterplatte (4) versehen ist, so dass die Leiterplatte (4) von der Spule (3) beabstandet ist.

5. Vorrichtung (10) nach Anspruch 4, wobei die Halterung eine Rippe (13) umfasst, die an einer Innenfläche einer Seitenwand des Gehäuses (1) angeordnet ist.

6. Vorrichtung (10) nach Anspruch 1, wobei im Gehäuse (1) eine sich in vertikaler Richtung (Y) erstreckende Durchgangsbohrung (12) zur Aufnahme des Körpers (21) des Temperatursensors (2) angeordnet ist.

7. Vorrichtung (10) nach Anspruch 6, wobei in dem Durchgangsloch (12) ein Stopper (15) angeordnet ist, um das elastische Element (22) in der vertikalen Richtung (Y) zum Boden des Gehäuses (1) hin zusammenzudrücken, so dass der Boden des Temperatursensors (2) den Leiter (20) berührt.

8. Vorrichtung (10) nach Anspruch 7, wobei der Temperatursensor (2) ferner ein Befestigungselement (23) umfasst, wobei eine Oberseite des Körpers (21) mit einem Schlitz (211) versehen ist, und wobei das Befestigungselement (23) oberhalb des Stoppers (15) angeordnet und in den Schlitz (211) eingerastet ist, um den Temperatursensor (2) an der Vorrichtung (10) zu befestigen.

9. Vorrichtung (10) nach Anspruch 1, ferner umfassend ein Befestigungselement, das neben dem Boden des Gehäuses angeordnet ist, um die Vorrichtung (10) an dem Leiter (20) zu befestigen.

10. Schaltgerät mit der Vorrichtung (10) nach einem der Ansprüche 1 bis 9.

## Revendications

1. Dispositif (10) pour mesurer une température d'un conducteur (20), comprenant :
un boîtier (1) ;
une bobine (3) disposée à un fond du boîtier (1) ;
une carte de circuit imprimé (4) disposée à l'intérieur du boîtier (1) et espacée de la bobine (3) dans une direction verticale (Y) relativement à un plan de positionnement (S) du dispositif (10), la carte de circuit imprimé (4) étant alimentée par la bobine (3) ; et
un capteur de température (2) couplé à la carte de circuit imprimé (4),
dans lequel le capteur de température (2) comprend un corps (21) et un élément élastique (22) disposé autour du corps (21), et l'élément élastique (22) est adapté pour être comprimé pour faire en sorte qu'un bas du capteur de température (2) entre en contact avec le conducteur (20) dans un état où le dispositif (10) est fixé au conducteur (20),
**caractérisé en ce que**
au moins une paroi latérale du boîtier (1) est pourvue d'une ouverture (14) située au moins en partie entre la carte de circuit imprimé (4) et la bobine (3) dans la direction verticale (Y), pour que de l'air puisse s'écouler entre l'extérieur et l'intérieur du boîtier (1) à travers l'ouverture (14).

2. Dispositif (10) selon la revendication 1, dans lequel des parois latérales du boîtier (1) sont chacune pourvues de l'ouverture (14).

3. Dispositif (10) selon la revendication 1, dans lequel deux parois latérales opposées du boîtier (1) sont symétriquement pourvues de l'ouverture (14).

4. Dispositif (10) selon la revendication 1, dans lequel le boîtier (1) est pourvu d'un support pour supporter la carte de circuit imprimé (4), de telle sorte que la carte de circuit imprimé (4) soit espacée de la bobine (3).

5. Dispositif (10) selon la revendication 4, dans lequel le support comprend une nervure (13) disposée sur une surface intérieure d'une paroi latérale du boîtier (1).

6. Dispositif (10) selon la revendication 1, dans lequel un trou débouchant (12) s'étendant dans la direction verticale (Y) est disposé dans le boîtier (1) pour recevoir le corps (21) du capteur de température (2).

7. Dispositif (10) selon la revendication 6, dans lequel une butée (15) est disposée dans le trou débouchant (12) pour comprimer l'élément élastique (22) dans la direction verticale (Y) vers le bas du boîtier (1), pour que le bas du capteur de température (2) entre en contact avec le conducteur (20).

8. Dispositif (10) selon la revendication 7, dans lequel le capteur de température (2) comprend en outre un élément de fixation (23), dans lequel un haut du corps (21) est pourvu d'une fente (211), et dans lequel l'élément de fixation (23) est disposé au-dessus de la butée (15) et ajusté par encliquetage dans la fente (211) pour monter le capteur de température (2) sur le dispositif (10).

9. Dispositif (10) selon la revendication 1, comprenant en outre un élément de montage agencé de façon adjacente au fond du boîtier pour fixer le dispositif (10) sur le conducteur (20).

10. Dispositif de commutation, comprenant le dispositif (10) selon l'une quelconque des revendications 1 à 9.
